# EUROPEAN PATENT SPECIFICATION

(11) **EP 3 433 482 B1**
(45) Date of publication and mention of the grant of the patent: **04.05.2022**
(21) Application number: 16713507.8
(22) Date of filing: 22.03.2016
(51) Int. Cl.: F02M 43/04, F02M 43/00, F02M 21/02, F02M 47/02, F02M 37/00, F02D 19/10, F02M 63/02

(54) **A FUEL INJECTOR UNIT, A FUEL FEEDING ARRANGEMENT AND AN INTERNAL COMBUSTION PISTON ENGINE**
KRAFTSTOFFEINSPRITZEREINHEIT, KRAFTSTOFFZUFÜHRUNGSANORDNUNG UND VERBRENNUNGSKOLBENMOTOR
UNITÉ FORMANT INJECTEUR DE CARBURANT, AGENCEMENT D'ALIMENTATION EN CARBURANT ET MOTEUR À COMBUSTION INTERNE À PISTON

(43) Date of publication of application: 30.01.2019
(73) Proprietor: Wärtsilä Finland Oy, 65100 Vaasa (FI)
(72) Inventor: LAINE, Mikko, 65100 Vaasa (FI)
(74) Representative: Genip Oy
(86) International application number: PCT/FI2016/050181
(87) International publication number: WO 2017/162902

(56) References cited:
- EP-A1- 0 778 410
- WO-A1-2014/138955
- WO-A1-2014/167166
- WO-A1-2015/090494
- US-A1- 2013 048 750
- US-A1- 2013 319 373
- US-B1- 6 298 833

## Description

### Technical field

The present invention relates to a fuel injector unit for assembly to a cylinder head of an internal combustion piston engine and for injecting first and second fuel to a cylinder of the internal combustion piston engine according to the preamble of claim 1.

The present invention relates also a fuel feeding arrangement and to an internal combustion piston engine comprising a fuel injector unit.

### Background art

Internal combustion engines are generally provided with fuel injection systems in which the provision of pressurize the fuel and the control of injection are functionally separated from each other. Fuel is fed by means of at least one high pressure fuel pump into a pressure accumulator, i.e. rail, from which the fuel is led through separate conduits into the injector or injection valve of each cylinder. These systems are commonly known as common rail fuel injection systems.

The pressure, timing of the injection, duration of the injection and quantity of the fuel supplied into the nozzle of the injector has also an impact on the quantity and quality of the combustion gases (pollutants, emissions...) generated by the combustion process. In practice, the operation of a fuel injector is electronically controlled, for example, by means of a hydraulic control system with a solenoid or piezoelectric valve, in order to obtain a sufficiently short and accurate injection.

In common rail fuel injection systems, the control of the injection valve, or specifically the injection needle valve, is typically accomplished by making use of the fuel pressure acting against surface of the needle valve in a direction of opening and/or closing the needle valve, depending on the case. In typical common rail systems, the injection pressure reaches high pressure level almost immediately when the needle valve starts moving (rising) away from its closed position in the injector nozzle.

It is also known in prior art to operate a piston engine by making use of two different fuels. Typically a gaseous fuel, such as natural gas, is used as the main fuel and a liquid fuel, such as LFO or diesel fuel oil, is used as pilot fuel so as to ignite the mixture of air and gaseous fuel present in the combustion chamber of the engine.

EP 0778410 A1 discloses an injection valve arrangement for an internal combustion engine. The arrangement comprises first valve means in the form of at least two needle valves for injecting gaseous fuel directly into a cylinder of the engine. The arrangement further comprises second valve means in the form of a needle valve for injecting pilot fuel into the cylinder so as to enrich the mixture therein for ignition. Control of the operation of the gas needle valves is arranged by means of a common control valve preferably under electronic control. The valve needles of the gas needle valves are mechanically connected to each other so that the movements thereof occur concurrently.

WO 2014/167166 A1 discloses a fuel injection unit for assembly to a cylinder head and for injecting first and second fuel to a cylinder of an internal combustion piston engine. The fuel injection unit comprises a first fuel feeding section, a second fuel feeding section, a pressure accumulator in the first fuel feeding section and a flow fuse valve arranged in the first fuel feeding section between the pressure accumulator and a fuel injection valve of the first fuel feeding section. The fuel injection valve comprises a fuel handling section and control section wherein the control section is a hydraulic control section fluidly separated from the fuel handling section.

WO 2015/090494 A1 discloses a dual fuel injector for a fuel injection device. The dual fuel injector comprises a liquid fuel injector unit with a nozzle needle assigned to a liquid fuel nozzle arrangement of the dual fuel injector and which is stroke controllable via a first control chamber. The dual fuel injector further comprises a gas injector unit with a gas nozzle needle assigned to a gas nozzle arrangement of the dual fuel injector and which is stroke controllable via a second control chamber. Each of the first and second control chambers can be impinged with a control fluid in order to control the stroke of the respective nozzle needle. Furthermore, the control fluid from both the first and the second control chambers can be discharged. The dual fuel injector has a control fluid reservoir in which discharged control fluid from the first control chamber can be introduced. The dual fuel injector is configured to impinge the second control chamber with control fluid from the control fluid reservoir for the stroke of the gas nozzle needle.

US 2013319373 A1 discloses a dual fuel injector in a dual common rail fuel system. The dual fuel injector includes an injector body defining a liquid fuel supply passage to a liquid fuel nozzle outlet and a gaseous fuel supply passage to a gaseous fuel nozzle outlet. A liquid fuel needle check is movable within the injector body and has an opening hydraulic surface exposed to a fuel pressure of a liquid fuel common rail. A gaseous fuel needle check is positioned side by side with the liquid fuel needle check and has an opening hydraulic surface exposed to the fuel pressure of the liquid fuel common rail.

An object of the invention is to provide a fuel injector unit in which the performance is considerably improved compared to the prior art solutions.

### Disclosure of the Invention

The objects of the invention can be met substantially as is disclosed in the independent claim and in the other claims describing more details of different embodiments of the invention.

According to the invention a fuel injector unit for assembly to a cylinder head of an internal combustion piston engine and for injecting first and second fuel to the internal combustion piston engine comprises all the features of claim 1.

There is a sealing fluid chamber arranged between the first control section and the first fuel gallery of the first fuel injection valve, and that the sealing fluid chamber is arranged in flow communication with the second fuel feeding section such that the second fuel is arranged to act as sealing fluid minimizing the first fuel to flow from the first fuel gallery to the first control section.

This provides a fuel injector unit for an internal combustion piston engine which performance is considerably improved. Particularly, it is possible to use a unique mixture of multiple fuels with one concept such as fuels with ultra-low viscosities, liquid gases, liquid alcohols (e.g. methanol, MeOH) or light fuel oil (LFO). Invention gives benefits for all liquefied gases, toxic fuels or easily evaporating fuels which are not desirable to leak out from the fuel injector or more specifically from the first fuel injection valve. This sealing strategy provides more reliable sealing of toxic and harmful fuel in emergency shutdowns. By the term "ultra-low viscosity fuel" we mean fuels which have kinematic viscosity in the range of 0,1·10⁻⁶ - 1·10⁻⁶ m²/s or less.

Particularly, the invention is feasible in using methanol. Depending on temperature (0-100 °C) the viscosity of methanol (0-100°C) is 0,29·10⁻⁶ - 1·10⁻⁶ m²/s

According to an embodiment of the invention, the sealing fluid chamber is arranged in flow communication with the second fuel feeding section via a pressure control valve. According to an embodiment of the invention sealing fluid pressure is reduced to close to the first fuel pressure with the pressure control valve i.e. a pressure reduction valve to avoid excess leakage to first fuel side.

According to an embodiment of the invention, the pressure control valve is adapted maintain a pressure in the sealing fluid chamber in response to the pressure of the first fuel.

According to the invention, the second fuel feeding section comprises a second fuel injection valve, a second fuel gallery and a second control section wherein position of the second injection valve is effected by a pressure of the second fuel in the second control section, and that the second fuel feeding section is provided with a flow fuse valve arranged between the second fuel inlet and the second fuel injection valve.

According to an embodiment of the invention, the second injection valve is provided with an injector needle which controls an injection of second fuel to the combustion chamber. The position of the injector needle of the second injection valve is effected by a pressure of the second fuel in the second control section so that the pressurized second fuel urges the injector needle of the second fuel injection valve towards its closed position and by reducing the pressure the fuel injector needle of the second fuel injection valve is allowed to move away from its closed position.

According to the invention, the flow fuse valve is arranged to open and close flow communication from the second fuel inlet via a second fuel channel to the sealing chamber of the first fuel feeding section.

According to an embodiment of the invention, the first control section of the first fuel feeding section is a hydraulic control section fluidly separated from the first fuel gallery and provided with a control oil inlet. The term "fluidly separated" means that the first fuel in the first fuel gallery and the control fluid in the first control section are not substantially or intentionally mixed with each other.

According to the invention, the sealing fluid chamber is provided with a discharge conduit for allowing a discharge of the second fuel therefrom so as to maintaining adequate pressure in the sealing fluid chamber.

According to an embodiment of the invention, the first fuel feeding section is provided with a first pressure accumulator arranged upstream the main flow fuse valve in the injector unit.

According to an embodiment of the invention, the second fuel feeding section is provided with a second fuel accumulator in the injector unit.

According to an embodiment of the invention, the pressure control valve is provided with a pressure detecting channel leading from the first fuel channel to the pressure control valve.

According to an embodiment of the invention, the pressure control valve is provided with a pressure detecting channel leading from a third branch downstream of the pressure control valve to the pressure control valve.

Another object of the invention is met by a fuel feeding arrangement comprising a first fuel system with at least one high pressure fuel pump which is arranged to pressurize the first fuel to the injection pressure, and a second fuel system with at least one pump which is arranged to pressurize the second fuel to the injection pressure. It is characteristic to the invention that the arrangement comprises a fuel injector unit according to anyone of claims 1-10 wherein the second fuel pressurized by the at least one pump is arranged as sealing fluid to the sealing fluid chamber of the first fuel feeding section so as to minimize the first fuel to flow from the first fuel gallery to the first control section.

This fuel feeding arrangement and the fuel injector unit provide several advantages:
- Better shot to shot accuracy and repeatability for the second fuel (e.g. pilot)
- Less engine oil to combustion through orifices which reduces carbon (clogging of the orifices)
- Lower and more accurate second fuel (e.g. pilot) quantity which results in lower emissions on a wider load range
- No first fuel (e.g. ultra-low viscosity fuel) leakage or no continuous first fuel re-liquefying which lead to lower parasitic losses.

According to an embodiment of the invention, the first control section is provided with a flow channel arranged to extend from an external control fluid source to the control chamber, which flow channel is provided with a valve so as to open or close flow communication from the external control fluid source to the control chamber.

Another object of the invention is met by an internal combustion piston engine comprising a fuel injector unit according to anyone of claims 1-12.

The fuel pressure in the second fuel system pressure must be maintained higher than the fuel pressure in the first fuel system to have the sealing fluid system to operate as intended. The pressure difference may be for example 5 MPa - 20MPa.

The exemplary embodiments of the invention presented in this patent application are not to be interpreted to pose limitations to the applicability of the appended claims. The verb "to comprise" is used in this patent application as an open limitation that does not exclude the existence of also unrecited features. The expressions referring to order or sequence, such as a first fuel feeding section and second fuel feeding section do not mean a certain order in the operation unless specifically stated.

### Brief Description of Drawings

In the following, the invention will be described with reference to the accompanying exemplary, schematic drawings, in which
Figure 1 illustrates a fuel feeding arrangement of an internal combustion piston engine according to the first embodiment of the invention,
Figure 2 illustrates a fuel feeding arrangement of an internal combustion piston engine according to another embodiment of the invention, and
Figure 3 illustrates a fuel feeding arrangement of an internal combustion piston engine according to still another embodiment of the invention.

### Detailed Description of Drawings

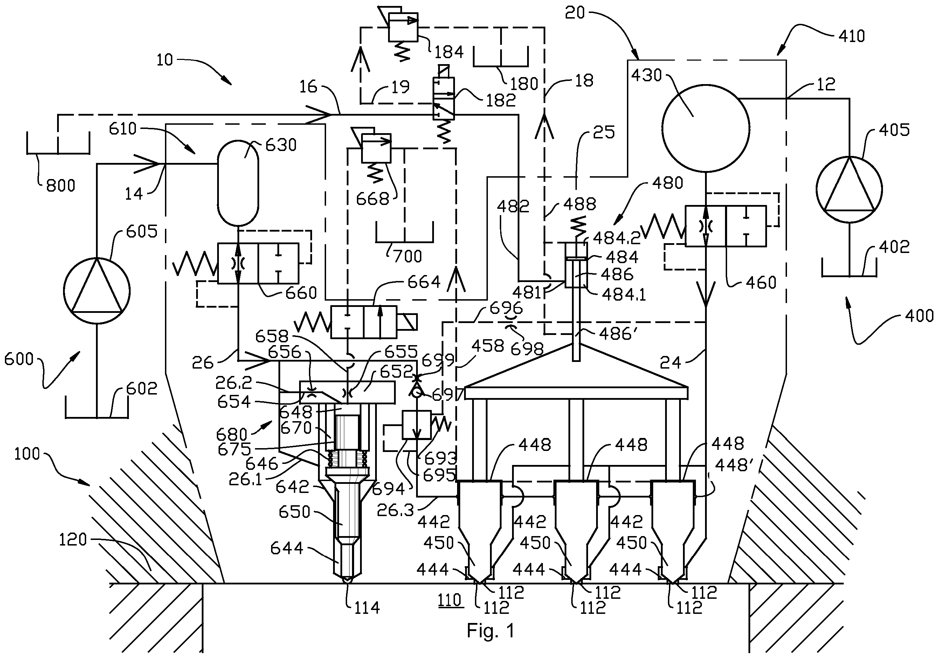

Figure 1 depicts schematically a fuel feeding arrangement 10 in an internal combustion piston engine 100, which engine 100 is depicted only by a schematic partial presentation of a cylinder 110 and a cylinder head 120. The fuel feeding arrangement 10 comprises a first fuel system 400 with at least one high pressure fuel pump 405 which is arranged to pressurize the first fuel to the injection pressure, and a second fuel system 600 with at least one pump 605 which is arranged to pressurize the second fuel to the injection pressure. Figure 1 illustrates a first fuel source 402 arranged in flow communication with the pump 405. Figure 1 illustrates also a second fuel source 602 arranged in flow communication with the pump 605.

The fuel feeding arrangement 10 further comprises a fuel injector unit 20 for assembly to the cylinder head 120 of the internal combustion piston engine 100 and for injecting first and second fuel to the internal combustion piston engine 100. The fuel injector unit 20 comprises a body 25 which can be removably assembled to the cylinder head 120 of the internal combustion piston engine 100. In Figure 1, phantom line illustrates a border of the fuel injector unit 20. Thus the fuel injector unit 20 can be easily retrofitted to the engine 100. The fuel injector unit 20 comprises two fuel feeding sections: a first fuel feeding section 410 and a second fuel feeding section 610. The first fuel feeding section 410 is coupled to the first fuel system 400 of the engine 100. The second fuel feeding section 610 is coupled to the second fuel system 600 of the engine 100. The first fuel system 400 is arranged to feed liquefied gaseous fuel and the second fuel system is arranged to feed liquid fuel. According to an embodiment of the invention, the first fuel system 400 feeds alcoholic based fuel such as methanol or other ultra-low viscosity or liquid gas fuel, and the second fuel system 600 feeds pilot fuel, such as diesel fuel, i.e. ignition fuel for compression ignition purposes. Thus, according to an embodiment of the invention, the first fuel is called as a main fuel and the second fuel as a pilot fuel. Both fuels are injected to the combustion chamber e.g. cylinder 112 of the engine 100 via the same fuel injector unit 20.

The first fuel feeding section 410 comprises at least one first fuel injection valve 442 for controlling injection of first fuel to the combustion chamber 110 of the engine 100 when assembled to the engine 100. The at least one first fuel injection valve 442 is arranged at a first end of the fuel injector unit 20, which is assembled to open into the combustion chamber i.e. cylinder 112 of the engine 100. In an embodiment of the invention, shown in Figure 1, three first fuel injection valves 442 are shown and the combustion chamber 110 is the cylinder 112 of the engine 100. The number of the first fuel injection valves 442 is not restricted to three by no means and the number of the first fuel injection valves 442 depends on the application or fuel. There may be only one of the first fuel injection valves 442.

Each of the first fuel injection valves 442 is provided with a control needle 450 and a first fuel gallery 444. The first fuel feeding section 410 is further provided with a first control section 480 arranged opposite end of the first fuel injection valve 442. The first control section 480 is a hydraulic control section and arranged to control the operation i.e. position of the control needle 450. The control section 480 is arranged to operate in hydraulic manner the first fuel feeding section 410 with a control fluid which is separate from the fuel in the first fuel feeding section 410. The operation of the first control section 480 will be described more in detail below.

Figure 1 further illustrates that the first control section 480 is fluidly separated from the first fuel gallery 444. The term "fluidly separated" means that the first fuel in the first fuel gallery 444 and the control fluid in the first control section 480 are not substantially or intentionally mixed with each other. The first fuel gallery 444 is connected to a first fuel inlet 12 in the fuel injector unit 20. The first fuel gallery 444 is also provided with injection orifice or orifices 112 opened in response to a position of the first fuel injection valve 442.

The first control section 480 is provided with a control chamber 484 wherein a control piston 486 is arranged. The control piston 486 is operated in a spring loaded manner as will be illustrated below. There is a gap between the control piston 486 and an inner wall of the control chamber 484. An end portion 486' of the control piston 486 extends to an operational connection with the control needle 450 so as to control opening and closing of the control needle 450. The control piston 486, specifically the end portion 486', is mechanically connected to the control needle 450. Thus movements occur concurrently with the control piston 486 and control needle 450.

The control chamber 484 is divided into two portions: a first end portion 484.1 and a second end portion 484.2 arranged opposite to each other. The first end portion 484.1 of the control chamber 484 of the first control section 480 is connected in flow communication with a passage 482 arranged in the fuel injector unit 20. Specifically, the first control section 480 is provided with a control oil inlet 481 wherein the control oil inlet 481 is arranged in flow communication with an external control fluid source 800 via the passage 482. The passage 482 is further arranged in flow communication with an external channel 16, which external channel 16 is in flow communication with the external control fluid source 800. The external channel 16 is provided with a valve element 182 arranged upstream the fuel injector unit 20. In other words, the fuel feeding arrangement 10 comprises the first control section 480 which is provided with a flow channel comprising the passage 482 and the external channel 16 which flow channel extends from the external control fluid source 800 to the control chamber 484. Furthermore, this flow channel is provided with the valve element 182 so as to open or close flow communication from the external control fluid source to the control chamber 484.

Advantageously, the valve element 182 is an electronically operated valve, a so-called electronic relief valve. The valve element 182 has two position: a first position and a second position. When the valve element 182 is arranged at the first position, the external channel 16 guides a control fluid or oil to flow from the external control fluid source 800 into the first end portion 484.1 of the control chamber 484 so as to control the operation of the control needle 450. The second end portion 484.2 of the control chamber 484 is connected via a passage 488 in the injector unit 20 and via an external discharge channel 18 to a low pressure reservoir 180. Specifically, a volume in the first end portion 484.1 increases when the control fluid is allowed to flow therein while a volume in the second end portion 484.2 decreases. A portion of the control fluid or oil flowing to the first end portion displaces corresponding portion from the second end portion. Then, a portion of the control fluid or oil from the second end portion 484.2 is guided via the passage 488 and via the external discharge channel 18 to the low pressure reservoir 180. Thus, when the control piston 486 moves towards the second end portion 484.2, it opens with the control needle 450 the flow communication from the first fuel gallery 444 to the cylinder 110 of the engine 100. In other words, the control fluid is acting on the control piston 486 so that it is lift upwards and the control needle 450 lifts up against a spring's force when pressurized. A spring force keeps the control piston 486 in its closing position (the first fuel injection valve 442 is also its closing position) when the control section 480 is not pressurized. The passage 488 is also arranged to collect small amount control oil leakage from the bottom of the control oil piston 486 and connects it to the passage 488. This will make sure that control oil and sealing fluid will not mix together.

When the valve element 182 is arranged at the second position (shown in Figure 1), the control fluid or oil flows from the first end portion 484.1 of the control chamber 484 to the low pressure reservoir 180 via an external discharge conduit 19. When the valve element 182 is arranged at the second position, the control needle moves towards its closing position and it closes the flow communication from the first fuel gallery 444 to the cylinder 110 of the engine 100. When the valve element 182 is arranged at the second position, the control section 480 is depressurized. Thus the flow communication from the first fuel gallery 444 to the combustion chamber i.e. cylinder 112 closes. The external discharge conduit 19 is provided with a valve 184 arranged to be operated in response by a pressure in the discharge conduit 19.

In an embodiment shown in Figure 1, the fuel injector unit 20, and more specifically, the first fuel feeding section 410 thereof, comprises a first pressure accumulator 430 integrated within the body 25 of the fuel injector unit 20. The first pressure accumulator 430 is arranged in flow communication with the first fuel injection valves 442 via a first fuel channel 24. Specifically, the first pressure accumulator 430 is arranged in flow communication with the first fuel gallery 444 via the first fuel channel 24. The first fuel channel 24 opens into the first fuel gallery 444.

The first fuel feeding section 410, more specifically the first fuel channel 24, is further provided with a main flow fuse valve 460 arranged between the first fuel inlet 12 in the injector unit 20 and the first fuel injection valve 442. In Figure 1, the main flow fuse valve 460 is arranged between the first pressure accumulator 430 and the first fuel gallery 444 of the first fuel injection valve 442. In other words, the first fuel feeding section 410 is provided with the first pressure accumulator 430 arranged upstream the main flow fuse valve 460 in the injector unit 20. The main flow fuse valve 460 is a device allowing only a predetermined amount of fluid to flow at one instance. The main flow fuse valve 460 is integrated within the body 25 of the fuel injector unit 20, in close proximity of the first fuel gallery 444 of the first fuel injection valve 442.

The second fuel feeding section 610 comprises a second fuel injection valve 642 for controlling injection of second fuel to the combustion chamber 110 the engine 100 when assembled to the engine 100. The second fuel injection valve 642 is arranged at the first end of the fuel injector unit 20, which is assembled to open into the combustion chamber i.e. cylinder 112 of the engine 100. The second fuel injection valve 642 comprises a first end arranged in a vicinity of second fuel injection spray orifices 114 and a second end opposite the first end. The combustion chamber 110 is in this embodiment the cylinder of the engine 100. The second fuel injection valve 642 is connected to a second fuel inlet 14 in the fuel injector unit 20.

The second fuel injection valve 642 comprises an injector needle 650 arranged therein. The second fuel injection valve 642 is provided with a second fuel gallery 644 and a second control section 680. The second control section 680 is arranged at a distance from the orifices 114 (i.e. in Figure 1 at an upper portion of the injector needle 650). The injector needle 650 is arranged to prevent or allow an injection of the second fuel to flow from the second fuel gallery 644 into the combustion chamber e.g. cylinder 112 of the engine 100 by closing or opening a flow connection between the second fuel injection spray orifices and the second fuel gallery 644.

The second control section 680 is provided with a control space 648 arranged opposite end of the second fuel gallery 644. The control space 648 is bordered by a collar part 670 into which the second end of the injector needle 650 of the second fuel injection valve 642 extends and an upper portion of the second end of the second fuel injection valve 642. The collar part 670 has a cylindrical inner space and the second end of the injector needle 650 of the second fuel injection valve 642 has a cylindrical outer surface and they have a common central and longitudinal axis. Thus and more specifically, the position of the injector needle 650 of the second injection valve 642 is effected by pressure of the second fuel in the control space 648. The pressurized second fuel urges the injector needle 650 towards its closed position and by reducing the pressure the injector needle 650 is allowed to move away from its closed position.

According to an embodiment illustrated in Figure 1, the second fuel system 600 is provided with a second accumulator space 630 arranged within the body 25 of the fuel injector unit 20. The second accumulator 630 is arranged in flow communication with the second fuel gallery 644 via a second fuel channel 26. The second fuel channel 26 opens into the second fuel gallery 644. The second fuel feeding section 610, more specifically the second fuel channel 26, is provided with a flow fuse valve 660 arranged between the second fuel inlet 14 and the second fuel injection valve 642. The flow fuse valve 660 is arranged to open and close flow communication from the second fuel inlet 14 via the second fuel channel 26 to a sealing fluid chamber 448 of the first fuel feeding section 410.

The sealing fluid chamber 448 comprises advantageously a ring volume 448' around the main needle guiding surface(s), which is located farther from the main needle(s) than the first fuel gallery 444. Higher pressure in sealing fluid chamber prevents the main fuel from flowing along the needle guide(s), but some of the sealing fuel can flow towards the first fuel gallery 444. This is acceptable because the sealing fluid is combustible and it will burn along with the main fuel.

The clearance around the control needle(s) 450 is very small and thus it keeps the sealing fluid flow on a very small level, and also the pressure in the sealing fluid chamber 448 and the ring volume 448' high enough. On top of the control needle 450 the sealing fluid chamber 448 forms a gallery which collects all sealing fluid(s) from all main needle(s). Then it is directed out of the injector through a dedicated outlet and conduit.

Specifically, the flow fuse valve 660 is arranged to allow only a limited amount of second fuel to flow blocking the second fuel to flow, for instance, in case of malfunction of the second fuel system 600. The second fuel injection valve 642 comprises a valve plate 652 arranged at the upper portion of the injector needle 650 or more specifically at an upper portion of the second fuel injection valve 642. The valve plate 652 borders the upper part of the second fuel injection valve 642.

The valve plate 652 is provided with a connection channel 654 which connects the second fuel channel 26 to the control space 648 inside the collar part 670. The connection channel 654 is provided with a first constriction 656. The valve plate 652 is provided also with a discharge channel 658 which opens into the control space 648 inside the collar part 670. The discharge channel 658 is provided with a second constriction 655 through which the discharge channel 658 connects to a valve member 664. The valve member 664 is preferably an on-off solenoid valve and it separates connectably a high pressure part and low pressure part from each other. The discharge channel 658 is connected to an external discharge chamber 700. The discharge channel 658 is provided with a valve element 668.

When the valve member 664 opens a flow communication between discharge channel 658 and the low pressure part i.e. the external discharge chamber 700, the pressure in the control space 648 inside the collar part 670 and above the injector needle 650 decreases rapidly. This is due to the fact that the first constriction 656 has a first area for fuel flow that is smaller than a second area of the second constriction 655 in the discharge channel 658. Decreasing the pressure in the control space 648 inside the collar part 670 and above the injector needle 650, while the pressure in the second fuel gallery 644 is maintained in practical circumstance unchanged, changes the balance of forces acting against the injector needle 650 in the direction of its longitudinal axis causing it to move towards the valve plate 652 and opening a flow communication between the orifices 114 for fuel injection and the fuel gallery 642.

As illustrated in Figure 1, the collar part 670 is pressed against the valve plate 664 by a needle spring 646 which is supported between the collar part 670 and the injector needle 650 of the second fuel feeding section 610. The needle spring 646 assists in holding the collar static and pressure tight against the valve plate 652. It should be noted that there can be a clearance 675 between the collar part 670 and the injector needle 650 so as to allow some fuel to flow or leak from the second fuel gallery 644 to the control space 648, which assists lubrication between the reciprocating injector needle 650 and the stationary collar part 670.

The fuel injector unit 20 further comprises the sealing fluid chamber 448 arranged between the first control section 480 and the first fuel gallery 444 of the first fuel injection valve 442. The sealing fluid chamber is arranged to circumscribe a stem part of the first fuel injection valve 442. For example, there may arrange a radial groove or alike 448' arranged into the cylinder section where the stem is arranged and the 26.3 is connected to the groove or alike.

The sealing fluid chamber 448 is arranged in flow communication with the second fuel feeding section 610 such that the second fuel is arranged to act as sealing fluid minimizing the first fuel to flow or leak out from the first fuel gallery 444 to the first control section 480. Therefore, the first fuel injection valve 442 is particularly suitable for injecting methanol and other toxic fuels, or other ultra-low viscosity or liquid gas fuels.

The second fuel channel 26 has three branches a first branch 26.1 is connected to the second fuel gallery 644, a second branch 26.2 is connected to the valve plate 652 and a third branch 26.3 is arranged in flow communication with the sealing fluid chamber 448 of the first fuel feeding section 410. It should be noted, however, that the first branch 26.1 can be integrated to the valve plate 652 even though not illustrated. The flow fuse valve 660 of the second fuel feeding section 610 is arranged to control a second fuel feeding into the sealing fluid chamber 448. Thus the flow fuse valve 660 of the second fuel feeding section 610 can open or close the flow communication from the second fuel inlet 14 in the injector unit 20 to the sealing fluid chamber 448 of the first fuel feeding section 410.

The third branch 26.3 of the second fuel channel 26 is provided with a pressure control valve 694. The third branch 26.3 is further provided with a check valve 697 and an orifice 699. The check valve 697 prevents the pressure from line 26.3 to escape if the flow fuse closes the fuel path or if the fuel pump 605 stops operating. The pressure control valve 694 is arranged to be operated in response of the pressure prevailing in the first fuel channel 24 and the pressure prevailing downstream the pressure control valve 694 in the third branch 26.3 that is between the pressure control valve 694 and the first fuel injection valve 448. Thus, the pressure control valve 694 effects on the feeding of second fuel into the sealing fluid chamber 448 in addition to the flow fuse valve 660 of the second fuel feeding section 610. However, if there is a malfunction in the second injection valve 642 and the flow fuse valve 660 closes then the sealing fluid does not flow into the sealing fluid chamber 448. The pressure control valve 694 is provided with a first connection line 696 acting as a pressure detecting channel leading from the first fuel channel 24 to the pressure control valve 694. The pressure control valve 694 is provided with a second connection line 695 acting as a pressure detecting channel leading from a location in the third branch 26.3 downstream of the pressure control valve 694 to the pressure control valve 694.

In the pressure control valve 694 the pressure of the first fuel channel 24 and the pressure in the third branch 26.3 downstream of the pressure control valve 694 are arranged to urge the pressure control valve 694 to opposite positions, such that the balance pressures determine together with a bias spring 693 the actual position of the valve. The spring force should be selected so that the pressure in third branch line 26.3 is about 5 - 20 kPa higher than the pressure in the connection line 696. If pressure in line 26.3 is higher than the set value, valve 694 will close until pressure in line 26.3 drops again.

The connection line 696 between the valve element 694 and the first fuel channel 24 is provided with a constriction 698 so as to control operation of the valve element 694. Thus, the sealing fluid chamber 448 is arranged in flow communication with the second fuel feeding section 610 via a pressure control valve 694. The pressure control valve i.e. the valve element 694 is adapted maintain a pressure in the sealing fluid chamber 448 in response to the pressure of the first fuel. Specifically, sealing fluid pressure can be reduced close to the first fuel pressure with the pressure control valve 694 so as to avoid excess leakage of the sealing fluid to the first fuel side.

The sealing chamber 448 is provided with a discharge conduit 458 which guides the sealing fluid to flow from the sealing chamber 448 to the external discharge chamber 700 similarly as is the control space 648 of the second fuel injection valve 642. Thus the discharge chamber 700 is common for the discharge conduit 458 of the first fuel feeding section 410 and the discharge channel 658 of the second fuel feeding section 610. In operation, the discharge conduit 458 continuously discharges portions of the second fuel therefrom, in practical circumstances, so as to maintaining adequate pressure in the sealing fluid chamber 448.

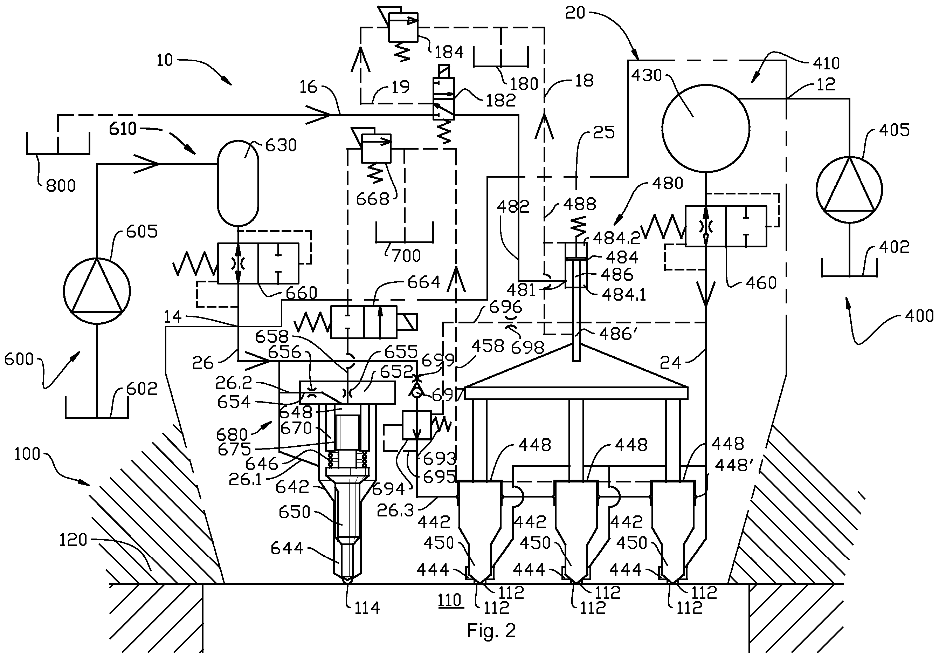

Figure 2 illustrates a fuel injection arrangement 10 according to an embodiment of the invention wherein the second accumulator space 630 and the flow fuse valve 660 are arranged outside of the fuel injector unit 20. In other words, the second accumulator space 630 and the flow fuse valve 660 do not belong to the body 25 of the fuel injector unit 20. Note that the second fuel inlet 14 is arranged in this embodiment between the second injection valve 642 and the flow fuse valve 660. In other words, the second fuel inlet 14 is downstream the flow fuse valve 660. More specifically, the fuel inlet 14 is arranged at a wall portion of the fuel injector 20. All the same features in Figures 1 and 2 are indicated by the same reference numbers.

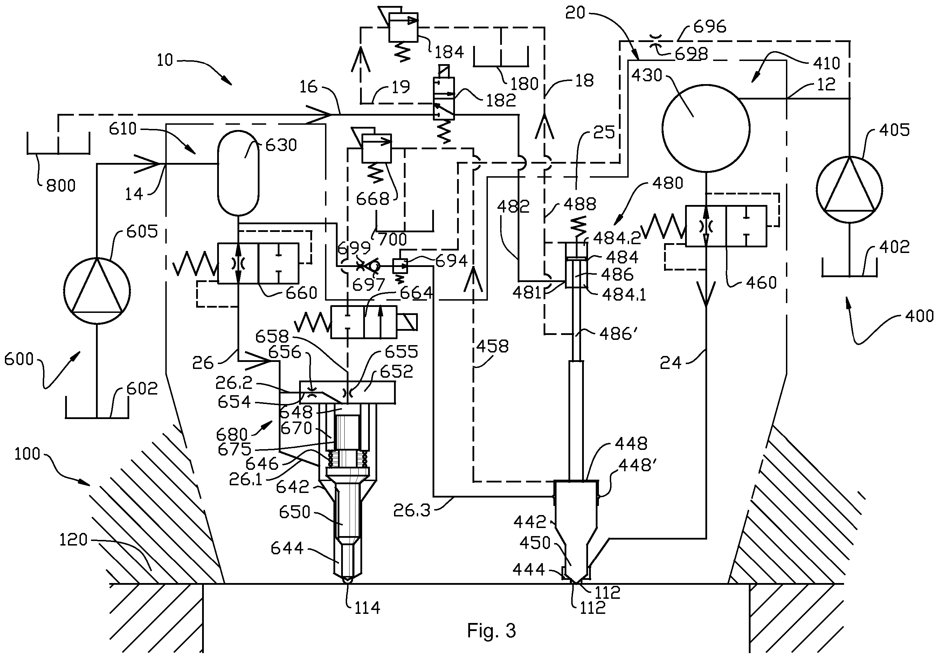

In the Figure 3 there is shown a fuel injection arrangement 10 according to another embodiment of the invention wherein the first fuel injection valve 420 comprises only one control needle 450 and its fuel gallery 444. This implies that according to the invention the amount of the control needles 450 is selected case by case depending of the required injection quantity during one injection.

Additionally, there is shown another feature, which however is usable in connection with any number of the control needles 452 in the injector unit 20. In the feature the third branch 26.3 of the second fuel channel 26 is arranged in flow communication between the sealing fluid chamber 448 of the first fuel feeding section 410 and the second fuel channel 26 upstream the flow fuse valve 660. In this embodiment the sealing fluid may be introduced to the sealing fluid chamber 448 irrespectively of the operational status of the flow fuse valve 660.

The third branch 26.3 of the second fuel channel 26 is provided with a pressure control valve 694 which operates and servers the same function as in the figure 1. The third branch 26.3 is further provided with a check valve 697 and an orifice 699. The check valve 697 prevents the pressure from line 26.3 to escape if the flow fuse closes the fuel path or if the fuel pump 605 stops operating. Remaining pressure in line 26.3 will drop slowly giving additional time to cope with the disturbance.

Here the pressure control valve 694, check valve 697 and orifice 699 are arranged outside the injector unit 20.

Even though Figures 1 2, and 3 illustrate that the combustion chamber is a cylinder of the engine, according to an embodiment of the invention, the combustion chamber 110 may a prechamber arranged conventionally in an upper portion of the cylinder, to the cylinder head.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible, and provided that the resulting configuration falls within the claimed scope.

## Claims

1. A fuel injector unit (20) for assembly to a cylinder head (120) of an internal combustion piston engine (100) and for injecting first and second fuel to the internal combustion piston engine (100), the fuel injector unit (20) comprising:
- A first fuel feeding section (410) comprising at least one first fuel injection valve (442) for controlling injection of first fuel to the engine (100) when assembled to the engine (100), wherein the first fuel injection valve (442) is provided with a first fuel gallery (444) and a first control section (480) arranged opposite end of the first fuel injection valve (442), the first control section being provided with a control chamber (484), wherein a control piston (486) is arranged, controlling opening and closing of a control needle (450) in the first fuel feeding section (410), and the first control section (480) is a hydraulic control section , and wherein the first fuel gallery (444) is connected to a first fuel inlet (12) in the fuel injector unit (20) and wherein the first fuel gallery (444) is provided with injection orifice or orifices (112) opened in response to a position of the first fuel injection valve (442), and wherein the first fuel feeding section (410) is further provided with a main flow fuse valve (460) arranged between the first fuel inlet (12) in the injector unit (20) and the first fuel injection valve (442),
- A second fuel feeding section (610) comprising a second fuel injection valve (642) for controlling injection of second fuel to the engine (100) when assembled to the engine (100), wherein the second fuel injection valve (642) is connected to a second fuel inlet (14) in the fuel injector unit (20), and the second fuel feeding section (610) comprises a second fuel injection valve (642), a second fuel gallery (644) and a second control section (680) wherein position of the second injection valve (642) is effected by a pressure of the second fuel in the second control section (680), and that the second fuel feeding section (610) is provided with a flow fuse valve (660) arranged between the second fuel inlet (14) and the second fuel injection valve (642).
- and a sealing fluid chamber (448) arranged between the first control section (480) and the first fuel gallery (444) of the first fuel injection valve (442), wherein
- the sealing fluid chamber (448) is arranged in flow communication with the flow fuse valve (660) of the second fuel feeding section (610) such that the second fuel is arranged to act as sealing fluid minimizing the first fuel to flow from the first fuel gallery (444) to the first control section (480) and
- the flow fuse valve (660) of the second fuel feeding section (610) is arranged to open and close flow communication from the second fuel inlet (14) to the sealing fluid chamber (448) of the first fuel feeding section (410), and
- the sealing fluid chamber (448) is provided with a discharge conduit (458) for allowing a discharge of the second fuel therefrom to a common discharge with the first fuel feeding section.

2. A fuel injector unit (20) according to claim 1, **characterized in that** the sealing fluid chamber (448) is arranged in flow communication with the second fuel feeding section (610) via a pressure control valve (694).

3. A fuel injector unit (20) according to claim 2, **characterized in that** the pressure control valve (694) is adapted maintain pressure in the sealing fluid chamber (448) higher than the pressure of the first fuel in a first fuel channel (24) connecting a first pressure accumulator (430) and the first fuel injection valves (442) of the first fuel feeding section (410).

4. A fuel injector unit (20) according to anyone of claims 1-3, **characterized in that** the first control section (480) of the first fuel feeding section (410) is a hydraulic control section fluidly separated from the first fuel gallery (444) and provided with a control oil inlet (481).

5. A fuel injector unit (20) according to anyone of claims 1-4, **characterized in that** the first fuel feeding section (410) is provided with a first pressure accumulator (430) arranged upstream the main flow fuse valve (460) in the injector unit (20).

6. A fuel injector unit (20) according to anyone of claims 1-5, **characterized in that** the second fuel feeding section (610) is provided with a second fuel accumulator (630) in the injector unit (20).

7. A fuel injector unit (20) according to claim 2, **characterized in that** the pressure control valve is provided with a pressure detecting channel leading from a first fuel channel (24) connecting a first pressure accumulator (430) and the first fuel injection valves (442) of the first fuel feeding section (410) to the pressure control valve (694).

8. A fuel injector unit (20) according to claim 2, **characterized in that** the pressure control valve is provided with a pressure detecting channel leading from a third branch (26.3) downstream of the pressure control valve (694) to the pressure control valve (694).

9. A fuel feeding arrangement (10) comprising a first fuel system (400) with at least one high pressure fuel pump (405) which is arranged to pressurize the first fuel to the injection pressure, and a second fuel system (600) with at least one pump (605) which is arranged to pressurize the second fuel to the injection pressure, **characterized in that** the arrangement (10) comprises a fuel injector unit (20) according to anyone of claims 1-8 wherein the second fuel pressurized by the at least one pump (605) is arranged as sealing fluid to the sealing fluid chamber (448) of the first fuel feeding section (410) so as to minimize the first fuel to flow from the first fuel gallery (444) to the first control section (480).

10. A fuel feeding arrangement (10) according to claim 9, **characterized in that** the first control section (480) is provided with a flow channel (16, 482) arranged to extend from an external control fluid source (800) to a control chamber (484), which flow channel (16, 482) is provided with a valve (182) so as to open or close flow communication from the external control fluid source (800) to the control chamber (484).

11. An internal combustion piston engine (100) comprising a fuel injector unit (20) according to anyone of claims 1-8.

## Patentansprüche

1. Kraftstoffeinspritzdüseneinheit (20) zum Anbauen an einen Zylinderkopf (120) eines Verbrennungskolbenmotors (100) und zum Einspritzen eines ersten und eines zweiten Kraftstoffs in den Verbrennungsmotor (100), wobei die Kraftstoffeinspritzdüseneinheit (20) umfasst:
- einen ersten Kraftstoffzufuhrteilabschnitt (410), der mindestens ein erstes Kraftstoffeinspritzventil (442) zum Steuern des Einspritzens des ersten Kraftstoffs in den Motor (100), wenn es an den Motor (100) angebaut ist, umfasst, wobei das erste Kraftstoffeinspritzventil (442) mit einer ersten Kraftstofframpe (444) und einem ersten Steuerteilabschnitt (480), der an dem entgegengesetzten Ende des ersten Kraftstoffeinspritzventils (442) eingerichtet ist, versehen ist, wobei der erste Steuerteilabschnitt mit einer Steuerkammer (484) versehen ist, in der ein Steuerkolben (486) eingerichtet ist, der das Öffnen und das Schließen einer Steuernadel (450) in dem ersten Kraftstoffzufuhrteilabschnitt (410) steuert, und der erste Steuerteilabschnitt (480) ein hydraulischer Steuerteilabschnitt ist, und wobei die erste Kraftstofframpe (444) mit einem ersten Kraftstoffeinlass (12) in die Kraftstoffeinspritzdüseneinheit (20) verbunden ist, und wobei die erste Kraftstofframpe (444) mit einer Einspritzöffnung oder Einspritzöffnungen (112) versehen ist, die als Reaktion auf eine Position des ersten Kraftstoffeinspritzventils (442) geöffnet wird (werden), und wobei der erste Kraftstoffzufuhrteilabschnitt (410) weiter mit einem Hauptströmungswächterventil (460) versehen ist, das zwischen dem ersten Kraftstoffeinlass (12) in der Einspritzdüseneinheit (20) und dem ersten Kraftstoffeinspritzventil (442) eingerichtet ist,
- einen zweiten Kraftstoffzufuhrteilabschnitt (610), der ein zweites Kraftstoffeinspritzventil (642) zum Steuern des Einspritzens des zweiten Kraftstoffs in den Motor (100), wenn es an den Motor (100) angebaut ist, umfasst, wobei das zweite Kraftstoffeinspritzventil (642) mit einem zweiten Kraftstoffeinlass (14) in der Kraftstoffeinspritzdüseneinheit (20) verbunden ist, und der zweite Kraftstoffzufuhrteilabschnitt (610) ein zweites Kraftstoffeinspritzventil (642), eine zweite Kraftstofframpe (644) und einen zweiten Steuerteilabschnitt (680) umfasst, wobei die Position des zweiten Einspritzventils (642) von einem Druck des zweiten Kraftstoffs in dem zweiten Steuerteilabschnitt (680) getätigt wird, und dass der zweite Kraftstoffzufuhrteilabschnitt (610) mit einem Strömungswächterventil (660) versehen ist, das zwischen dem zweiten Kraftstoffeinlass (14) und dem zweiten Kraftstoffeinspritzventil (642) eingerichtet ist,
- und eine Abdichtungsfluidkammer (448), die zwischen dem ersten Steuerteilabschnitt (480) und der ersten Kraftstofframpe (444) des ersten Kraftstoffeinspritzventils (442) eingerichtet ist,
wobei die Abdichtungsfluidkammer (448) in Strömungskommunikation mit dem Strömungswächterventil (660) des zweiten Kraftstoffzufuhrteilabschnitts (610) derart eingerichtet ist, dass der zweite Kraftstoff eingerichtet ist, um als ein Abdichtungsfluid zu wirken, das den ersten Kraftstoff, der von der ersten Kraftstofframpe (444) zu dem ersten Steuerteilabschnitt (480) fließen soll, minimiert, und das Strömungswächterventil (660) des zweiten Kraftstoffzufuhrteilabschnitts (610) eingerichtet ist, um die Strömungskommunikation von dem zweiten Kraftstoffeinlass (14) zu der Abdichtungsfluidkammer (448) des ersten Kraftstoffzufuhrteilabschnitts (410) zu öffnen und zu schließen, und die Abdichtungsfluidkammer (448) mit einer Entleerungsleitung (458) versehen ist, um ein Entleeren des zweiten Kraftstoffs daraus zu einer gemeinsamen Entleerung mit dem ersten Kraftstoffzufuhrteilabschnitt zu erlauben.

2. Kraftstoffeinspritzdüseneinheit (20) nach Anspruch 1, **dadurch gekennzeichnet, dass** die Abdichtungsfluidkammer (448) in Strömungskommunikation mit dem zweiten Kraftstoffzufuhrteilabschnitt (610) über ein Drucksteuerventil (694) eingerichtet ist.

3. Kraftstoffeinspritzdüseneinheit (20) nach Anspruch 2, **dadurch gekennzeichnet, dass** das Drucksteuerventil (694) angepasst ist, um Druck in der Abdichtungsfluidkammer (448) höher zu halten als der Druck des ersten Kraftstoffs in einem ersten Kraftstoffkanal (24), der einen ersten Druckspeicher (430) und die ersten Kraftstoffeinspritzventile (442) des ersten Kraftstoffzufuhrteilabschnitts (410) verbindet.

4. Kraftstoffeinspritzdüseneinheit (20) nach einem der Ansprüche 1 bis 3, **dadurch gekennzeichnet, dass** der erste Steuerteilabschnitt (480) des ersten Kraftstoffzufuhrteilabschnitts (410) ein hydraulischer Steuerteilabschnitt ist, der fluidisch von der ersten Kraftstofframpe (444) getrennt und mit einem Steueröleinlass (481) versehen ist.

5. Kraftstoffeinspritzdüseneinheit (20) nach einem der Ansprüche 1 bis 4, **dadurch gekennzeichnet, dass** der erste Kraftstoffzufuhrteilabschnitt (410) mit einem ersten Druckspeicher (430) versehen ist, der stromaufwärts des Hauptströmungsdruckwächterventils (460) in der Einspritzdüseneinheit (20) eingerichtet ist.

6. Kraftstoffeinspritzdüseneinheit (20) nach einem der Ansprüche 1 bis 5, **dadurch gekennzeichnet, dass** der zweite Kraftstoffzufuhrteilabschnitt (610) mit einem zweiten Kraftstoffsammler (630) in der Einspritzdüseneinheit (20) versehen ist.

7. Kraftstoffeinspritzdüseneinheit (20) nach Anspruch 2, **dadurch gekennzeichnet, dass** das Drucksteuerventil mit einem Druckerfassungskanal versehen ist, der von einem ersten Kraftstoffkanal (24), der einen ersten Druckspeicher (430) und die ersten Kraftstoffeinspritzdüsen (442) des ersten Kraftstoffzufuhrteilabschnitts (410) verbindet, zu dem Drucksteuerventil (694) führt.

8. Kraftstoffeinspritzdüseneinheit (20) nach Anspruch 2, **dadurch gekennzeichnet, dass** das Drucksteuerventil mit einem Druckerfassungskanal versehen ist, der von einem dritten Zweig (263) stromabwärts des Drucksteuerventils (694) zu dem Drucksteuerventil (694) führt.

9. Kraftstoffzufuhreinrichtung (10), die ein erstes Kraftstoffsystem (400) mit mindestens einer Hochdruckkraftstoffpumpe (405) umfasst, die eingerichtet ist, um den ersten Kraftstoff mit Druck auf den Einspritzdruck zu beaufschlagen, und ein zweites Kraftstoffsystem (600) mit mindestens einer Pumpe (605), die eingerichtet ist, um den zweiten Kraftstoff auf den Einspritzdruck zu beaufschlagen, **dadurch gekennzeichnet, dass** die Einrichtung (10) eine Kraftstoffeinspritzdüseneinheit (20) nach einem der Ansprüche 1 bis 8 umfasst, wobei der zweite Kraftstoff, der von der mindestens einen Pumpe (605) mit Druck beaufschlagt ist, als Abdichtungsfluid zu der Abdichtungsfluidkammer (448) des ersten Kraftstoffzufuhrteilabschnitts (410) derart eingerichtet ist, dass der erste Kraftstoff, der von der ersten Kraftstofframpe (444) zu dem ersten Steuerteilabschnitt (480) strömen soll, minimiert ist.

10. Kraftstoffzufuhreinrichtung (10) nach Anspruch 9, **dadurch gekennzeichnet, dass** der erste Steuerteilabschnitt (480) mit einem Strömungskanal (16, 482) versehen ist, der eingerichtet ist, um sich von einer ersten Steuerfluidquelle (800) zu einer Steuerkammer (484) zu erstrecken, wobei der Strömungskanal (16, 482) mit einem Ventil (182) versehen ist, um die Strömungskommunikation von der externen Steuerfluidquelle (800) zu der Steuerkammer (484) zu öffnen oder zu schließen.

11. Verbrennungskolbenmotor (100), der eine Kraftstoffeinspritzdüseneinheit (20) nach einem der Ansprüche 1 bis 8 umfasst.

## Revendications

1. Unité d'injection de carburant (20) destinée à être montée sur une culasse (120) d'un moteur à pistons à combustion interne (100) et destinée à injecter un premier et un deuxième carburant dans le moteur à pistons à combustion interne (100), l'unité d'injection de carburant (20) comprenant :
- une première section d'alimentation en carburant (410) comprenant au moins une première soupape d'injection de carburant (442) pour commander l'injection du premier carburant dans le moteur (100) lorsqu'elle est assemblée au moteur (100), dans laquelle la première soupape d'injection de carburant (442) est pourvue d'une première galerie de carburant (444) et d'une première section de commande (480) disposée à l'opposé de l'extrémité de la première soupape d'injection de carburant (442), la première section de commande étant pourvue d'une chambre de commande (484), dans laquelle un piston de commande (486) est agencé, commandant l'ouverture et la fermeture d'une aiguille de commande (450) dans la première section d'alimentation en carburant (410), et la première section de commande (480) est une section de commande hydraulique, et dans laquelle la première galerie de carburant (444) est raccordée à une première entrée de carburant (12) dans l'unité d'injection de carburant (20) et dans laquelle la première galerie de carburant (444) est pourvue d'un ou plusieurs orifices d'injection (112) ouvert en réponse à une position de la première soupape d'injection de carburant (442), et dans laquelle la première section d'alimentation en carburant (410) est en outre pourvue d'une soupape de fusible de débit principal (460) agencée entre la première entrée de carburant (12) dans l'unité d'injection (20) et la première soupape d'injection de carburant (442),
- une deuxième section d'alimentation en carburant (610) comprenant une deuxième soupape d'injection de carburant (642) pour commander l'injection d'un deuxième carburant dans le moteur (100) lorsqu'elle est assemblée au moteur (100), dans laquelle la deuxième soupape d'injection de carburant (642) est raccordée à une deuxième entrée de carburant (14) dans l'unité d'injection de carburant (20), et la deuxième section d'alimentation en carburant (610) comprend une deuxième soupape d'injection de carburant (642), une deuxième galerie de carburant (644) et une deuxième section de commande (680) dans laquelle la position de la deuxième soupape d'injection (642) est affectée par une pression du deuxième carburant dans la deuxième section de commande (680), et en ce que la deuxième section d'alimentation de carburant (610) est pourvue d'une soupape de fusible de débit (660) agencée entre la deuxième entrée de carburant (14) et la deuxième soupape d'injection de carburant (642),
- et une chambre de fluide d'étanchéité (448) agencée entre la première section de commande (480) et la première galerie de carburant (444) de la première soupape d'injection de carburant (442),
dans laquelle
- la chambre de fluide d'étanchéité (448) est agencée en communication fluidique avec la soupape de fusible de débit (660) de la deuxième section d'alimentation en carburant (610) de sorte que le deuxième carburant soit agencé pour agir comme fluide d'étanchéité en minimisant l'écoulement du premier carburant de la première galerie de combustible (444) à la première section de commande (480) et
- la soupape de fusible de débit (660) de la deuxième section d'alimentation en carburant (610) est agencée pour ouvrir et fermer la communication fluidique de la deuxième entrée de carburant (14) à la chambre de fluide d'étanchéité (448) de la première section d'alimentation en carburant (410),
- et la chambre de fluide d'étanchéité (448) est pourvue d'un conduit de décharge (458) pour permettre une décharge du deuxième carburant depuis celle-ci vers une décharge commune avec la première section d'alimentation en carburant.

2. Unité d'injection de carburant (20) selon la revendication 1, **caractérisée en ce que** la chambre de fluide d'étanchéité (448) est agencée en communication fluidique avec la deuxième section d'alimentation en carburant (610) via une soupape de commande de pression (694).

3. Unité d'injection de carburant (20) selon la revendication 2, **caractérisée en ce que** la soupape de commande de pression (694) est adaptée pour maintenir une pression dans la chambre de fluide d'étanchéité (448) supérieure à la pression du premier carburant dans un premier canal de carburant (24) raccordant un premier accumulateur de pression (430) et les premières soupapes d'injection de carburant (442) de la première section d'alimentation en carburant (410).

4. Unité d'injection de carburant (20) selon une quelconque des revendications 1 à 3, **caractérisée en ce que** la première section de commande (480) de la première section d'alimentation en carburant (410) est une section de commande hydraulique séparée fluidiquement de la première galerie de carburant (444) et pourvue d'une entrée d'huile de commande (481) .

5. Unité d'injection de carburant (20) selon une quelconque des revendications 1 à 4, **caractérisée en ce que** la première section d'alimentation en carburant (410) est pourvue d'un premier accumulateur de pression (430) agencé en amont de la soupape de fusible de débit principal (460) dans l'unité d'injection (20).

6. Unité d'injection de carburant (20) selon une quelconque des revendications 1 à 5, **caractérisée en ce que** la deuxième section d'alimentation en carburant (610) est pourvue d'un deuxième accumulateur de carburant (630) dans l'unité d'injection (20).

7. Unité d'injection de carburant (20) selon la revendication 2, **caractérisée en ce que** la soupape de commande de pression est pourvue d'un canal de détection de pression partant d'un premier canal de carburant (24) raccordant un premier accumulateur de pression (430) et les premières soupapes du système d'injection de carburant (442) de la première section d'alimentation en carburant (410) à la soupape de commande de pression (694).

8. Unité d'injection de carburant (20) selon la revendication 2, **caractérisée en ce que** la soupape de commande de pression est pourvue d'un canal de détection de pression menant d'une troisième branche (26.3) en aval de la soupape de commande de pression (694) à la soupape de commande de pression (694).

9. Agencement d'alimentation en carburant (10) comprenant un premier système de carburant (400) avec au moins une pompe à carburant haute pression (405) qui est agencée pour pressuriser le premier carburant à la pression d'injection, et un deuxième système de carburant (600) avec au moins une pompe (605) qui est agencée pour pressuriser le deuxième carburant à la pression d'injection, **caractérisé en ce que** l'agencement (10) comprend une unité d'injection de carburant (20) selon une quelconque des revendications 1 à 8, dans laquelle le deuxième carburant pressurisé par la au moins une pompe (605) est agencé en tant que fluide d'étanchéité vers la chambre de fluide d'étanchéité (448) de la première section d'alimentation en carburant (410) de manière à minimiser le premier écoulement de carburant de la première galerie de carburant (444) vers la première section de commande (480).

10. Agencement d'alimentation en carburant (10) selon la revendication 9, **caractérisé en ce que** la première section de commande (480) est pourvue d'un canal d'écoulement (16, 482) agencé pour s'étendre d'une source externe de fluide de commande (800) vers une chambre de commande (484), lequel canal d'écoulement (16, 482) est pourvu d'un une soupape (182) de façon à ouvrir ou fermer la communication fluidique de la source externe de fluide de commande (800) vers la chambre de commande (484).

11. Moteur à piston à combustion interne (100) comprenant une unité d'injection de carburant (20) selon une quelconque des revendications 1 à 8.
